# EUROPEAN PATENT APPLICATION

(11) **EP 4 443 407 A1**
(43) Date of publication of application: **09.10.2024**
(21) Application number: 24168403.4
(22) Date of filing: 04.04.2024
(51) Int. Cl.: G08B 29/14, G08B 17/113, G08B 17/107

(54) **SMOKE DETECTOR UNIT**

(30) Priority: 06.04.2023 GB 202305204
(71) Applicant: Thorn Security Limited, Sunbury-on-Thames Middlesex TW16 5DB (GB)
(72) Inventor: Penney, Stephen John, Sunbury-on-Thames, Middlesex TW16 5DB (GB)
(74) Representative: Hunter, Christopher Jack Owen

(57) **Abstract**

The smoke detector unit according to the present disclosure has a detection chamber (or test chamber) and an aerosol generator, both of which are disposed inside the smoke detector unit. The aerosol generator can generate a test aerosol using an aerosolisable material, and is able to release the test aerosol directly into the detection chamber. The aerosolisable material may be a solid, or a fluid (e.g. a liquid or a gas). The smoke detector unit, or an external device such as a control panel, may determine that a safety test has been validly passed if the test aerosol clears from the detection chamber within a specified time period.

## Description

### Field of Invention

The present invention relates to a smoke detector unit. More specifically, the present invention relates to a smoke detector unit including means for testing the smoke detector unit.

### Backaround

Smoke detectors can be tested by exposing them to aerosol. This can be achieved by using aerosol generator devices which are mounted on the end of long poles. It is also known to provide smoke detector testers that can be mounted in the vicinity of a smoke detector. If the smoke detector can detect the aerosol droplets generated by the smoke detector tester, this demonstrates that there are no significant obstructions preventing the ingress of aerosol into the detector, and the smoke detector is working normally.

### Summary of Invention

Mounting a smoke detector tester externally to a smoke detector requires additional wiring in order for the external tester to be powered and controlled. Further, the smoke detector tester requires a larger footprint compared to that of the smoke detector alone, and may be unsightly.

The smoke detector unit according to the present disclosure addresses the above issues by incorporating the tester features into the detector unit itself. This removes the need for separate external wiring and reduces the footprint of the smoke detector/tester system. Retrofitting existing sites using smoke detectors according to the present disclosure only requires the replacement of existing detectors or bases, removing the need for a specialist installer to fit additional equipment and wiring.

According to an aspect of the present invention, there is provided a smoke detector unit comprising: a detection chamber; a detector element configured to detect the presence of aerosol within the detection chamber; a housing; and an aerosol generator disposed within the housing, wherein the aerosol generator is configured to generate an aerosol using an aerosolisable material such that the generated aerosol is released into the detection chamber in use.

The smoke detector unit may comprise a controller configured to determine, based on readings from the detector element, how long the detector element is able to detect the generated aerosol in the detection chamber, and generate, based on the result of the determination, an output indicating whether the smoke detector unit has passed a safety test.

The smoke detector may comprise a reservoir for storing the aerosolisable material.

The aerosolisable material may be a fluid. The smoke detector may comprise a flow controller configured to control flow of the fluid from the reservoirto the aerosol generator.

The aerosol generator may be configured to activate at the same time as the flow controller, or up to 60 seconds after the flow controller.

The reservoir may comprise a receptacle arranged to hold the fluid.

The housing may enclose the detection chamber and the detector element.

The smoke detector unit may further comprise a channel connecting the aerosol generator to the detection chamber.

The housing may comprise a first housing enclosing the detection chamber and the detector element, and a second housing enclosing the aerosol generator. The first housing may comprise a first opening adjacent to the detection chamber, and the second housing may comprise a second opening adjacent to the aerosol generator. The first and second openings may be arranged such that the generated aerosol is released into the detection chamber via the first and second openings in use.

The smoke detector may comprise a power supply. The aerosol generator may be electrically connected to the power supply.

According to another aspect of the present invention, there is provided a system comprising: a smoke detector unit as set out above; and a controller configured to determine, based on readings received from the detector element of the smoke detector unit, how long the detector element is able to detect the generated aerosol in the detection chamber, and generate, based on the result of the determination, an output indicating whether the smoke detector unit has passed a safety test.

The system may further comprise a control panel connected to the smoke detector unit, wherein the control panel comprises the controller.

According to another aspect of the present invention, there is provided a method comprising: receiving readings from a detector element of a smoke detector unit; determining, based on the readings, how long the detector element is able to detect aerosol in a detection chamber of the smoke detector unit; and generating, based on the result of the determination, an output indicating whether the smoke detector unit has passed a safety test.

### Brief Description of the Drawings

The present disclosure will now be described by way of example only with reference to the accompanying drawings in which like reference numerals refer to like parts, and in which:
Figure 1 is a sectional view of a smoke detector unit according to an embodiment of the present disclosure;
Figure 2 is a sectional view of a smoke detector unit according to an embodiment of the present disclosure; and
Figure 3 is a flow chart showing a method according to an embodiment of the present disclosure.

### Detailed Description

The smoke detector unit according to the present disclosure has a detection chamber (or test chamber) and an aerosol generator, both of which are disposed inside the smoke detector unit. The aerosol generator can generate a test aerosol using an aerosolisable material, and is able to release the test aerosol directly into the detection chamber. The aerosolisable material may be a solid, or a fluid (e.g. a liquid or a gas). The smoke detector unit, or an external device such as a control panel, may determine that a safety test has been validly passed if the test aerosol clears from the detection chamber within a specified time period.

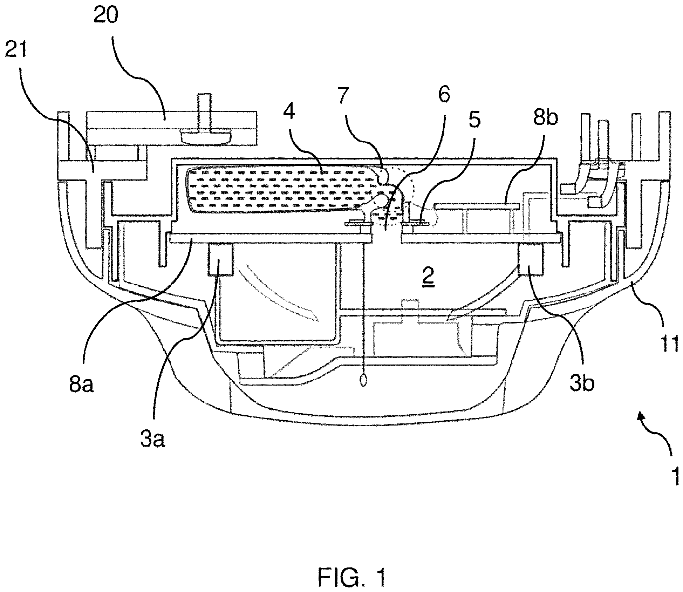

Figure 1 shows an example of a smoke detector 1 attached to a detector base 20. The smoke detector 1 includes a detector element which is located within a housing 11 of the smoke detector. The detector element is controlled by a first controller 8a. In the present example, the detector element is an optical smoke detector element including a light source 3a and a photodetector 3b. The housing 11 includes openings (not shown) through which airborne smoke particles are able to pass to a detection chamber 2 within the housing 11, where they can be detected by the detector element. The openings through which the airborne smoke particles are able to pass often include grills to impede the entry of insects or large airborne particles which do not originate from a fire. In very dirty environments, the grills can become blocked with dirt, obstructing the entry of smoke particles, thereby limiting the performance of the smoke detector.

In use, the detector base 20 is attached to a surface of a building, typically a ceiling or wall, and is connected to a fire alarm system via alarm cabling which is typically arranged in a loop, each loop ending at a control panel (known in Europe as 'control and indicating equipment', or CIE). The loop will normally connect a number of components of a fire alarm system, such as detectors, sounders, alarm buttons and the like. The loop will also provide electrical power to the components. Attachment of the smoke detector 1 to the detector base 20 connects the smoke detector 1 directly to the alarm cabling loop.

The smoke detector 1 includes a reservoir arranged to store an aerosolisable material, which in the present case is a liquid. In the present example, the reservoir is a receptacle 4 which is located within the housing 11 of the smoke detector 1, and is shaped to fit into a suitable space within the housing 11. In other examples, the reservoir may be located outside the housing of the smoke detector. In the present example, a single reservoir is provided. However, in other examples, multiple reservoirs may be provided. In yet other examples, other means for storing aerosolisable material, such as sponges or hydrated chemical compounds, may be used.

The receptacle 4 may be made of a deformable structure so that it will yield. In the present example, this is effected simply by the side walls of the receptacle 4 being deformable and flexible, but in other embodiments it could be effected by a bellows like structure which collapses as the liquid within the receptacle 4 is depleted during use. This also ensures that, as liquid is atomised, it is not replaced by ambient air which might contaminate the liquid with within the receptacle 4.

The smoke detector 1 includes an aerosol generator 5 which is configured to generate an aerosol using an aerosolisable material. In the present example, the aerosol generator 5 is configured to generate an aerosol using liquid received from the receptacle 4. The aerosol generator 5 is disposed within the housing 11. The aerosol generator 5 is controlled by a second controller 8b. In the present example, the aerosol generator 5 is a vibrating mesh type aerosol generator in which a mesh is supported by piezoelectric elements which can be caused to vibrate, thereby releasing the liquid located immediately behind the mesh through the holes in the mesh and forming an aerosol. The characteristics of the aerosol, such as the amount of liquid which is aerosolised and the droplet size, are a function of the size of the holes in the mesh and the characteristics of the vibrations applied to the mesh by the piezoelectric crystal element. The present disclosure is not limited to vibrating mesh type aerosol generators, and any other suitable type of aerosol generating device may be used. For example, the aerosol generator may use any of the following aerosol generating methods: evaporation condensation; atomization; mechanical; electrostatic generation; spark discharge; bubble bursting or combustion.

In the present example, the aerosol generator 5 is connected directly to the detection chamber 2 by a channel 6, so that aerosol generated by the aerosol generator 5 can be introduced into the detection chamber 2, where it can be detected by the detector element. If the detector 1 is working normally, the aerosol will gradually exit the detection chamber 2 through the openings in the housing 11. Hence, the amount of aerosol detected by the detector element will decrease over time. The time taken for the amount of aerosol detected by the detector element to fall to zero (or close to zero) is generally proportional to the amount of aerosol that is released into the detection chamber 2.

In the present example, a flow controller 7 is disposed between the receptacle 4 and the detection chamber 2. The flow controller 7 is controlled by the second controller 8b. The flow controller 7 controls the flow of liquid from the receptacle 4 to the aerosol generator 5 in order to release a certain amount of the liquid from the receptacle 4 to the aerosol generator 5. This means that precisely the right amount of the liquid is aerosolised during a test, thereby reducing waste, and preventing excess test fluid from collecting at the aerosol generator 5 and potentially leaking into other parts of the detector 1. In the present example, the flow controller 7 is an electroactive membrane valve. In other examples, any other suitable valve technology may be used, e.g. solenoid; piezo operated; microelectromechanical systems (MEMS) fluidic control; electrostatic; servo driven mechanical; movement of a fixed magnet; or electrochemical. In yet other examples, other types of flow control technology may be used, such as electrostatic liquid control or mechanical piercing of a micro reservoir.

In some examples, the aerosol generator 5 may activate at the same time as the flow controller 7 releases liquid from the receptacle 4, or a predetermined time after the flow controller 7 releases liquid from the receptacle 4 (e.g. 10 seconds, 20 seconds, 30 seconds or 60 seconds). This minimises the amount of energy used on driving the aerosol generator 5 without liquid being present, while avoiding the aerosol generator 5 becoming overwhelmed with liquid and allowing it to remain dry when not in use.

The smoke detector 1 may be controlled by a controller which is remote from the smoke detector and transmits control signals to the smoke detector 1. The control signals may be transmitted wirelessly, superimposed on the power supply line, or on a line which is independent of the power supply line. In the present example, the smoke detector 1 is controlled by CIE which transmits signals along the power lines to command the smoke detector 1 to record and report back the smoke level reading and also control the test operation of the smoke detector 1. Alternatively, or in addition, the smoke detector 1 may have one or more internal processors to control the regular operation of the smoke detector and the test process, which would enable the detector to determine the interval between test periods and inhibit signalling until the test is completed.

In the present example, the CIE is configured to poll the smoke detector 1 at a time when test aerosol should be present, to verify that the tester has operated correctly and then at a later period to determine that the aerosol level has dropped to a level that indicates that smoke is clearing from the smoke detector 1 correctly. Normal detection polling will then recommence once the smoke detector 1 has passed the safety test and the amount of aerosol detected by the detector element has returned sufficiently close to a "no smoke" value to be able to detect smoke correctly. If the smoke detector 1 has passed the safety test, no further action is necessary. If the smoke detector 1 fails the safety test, a predetermined indication will be sent e.g. to a maintenance technician.

The smoke detector 1 includes a power supply (not shown) which supplies power to the various components of the smoke detector 1, such as the controllers 8a, 8b and the aerosol generator 5. In the present example, the power supply is part of controller 8a and receives power from a power line. In other examples, the power supply may be an energy storage device, such as a battery.

The smoke detector 1 may also include an antenna (not shown) for receipt and/or transmission of wireless signals. This allows a user to wirelessly control the smoke detector 1 to perform a self-test.

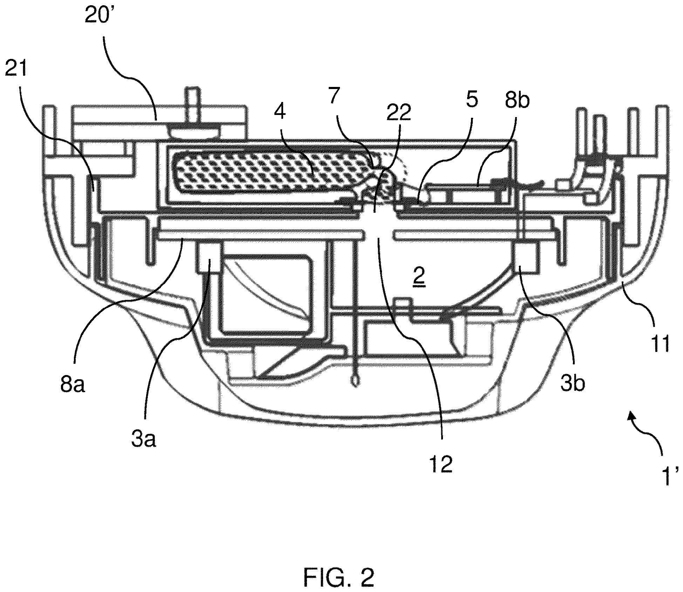

Figure 2 shows an example of a smoke detector 1' attached to a detector base 20'. In this example, the receptacle 4, the aerosol generator 5, the flow controller 7 and the second controller 8b are disposed within a housing 21 of the detector base 20'. A first opening 12 is formed in the top surface of the housing 11 of the smoke detector 1' adjacent to the detection chamber 2, and a second opening 22 is formed in the bottom surface of the housing 21 adjacent to the aerosol generator 5. The first and second openings 12, 22 face each other, such that aerosol generated by the aerosol generator 5 can be introduced into the detection chamber 2 via the openings 12, 22, where it can be detected by the detector element.

An example of a test operation will now be described in relation to the smoke detector 1 shown in Figure 1. However, it will be appreciated that this test operation is also applicable to the smoke detector 1' shown in Figure 2.

In this example, the test operation is controlled by an external control panel to which the smoke detector 1 is connected. In other examples, the test operation may be controlled by a controller in the smoke detector.

At a given time (which may be pre-defined, operator determined, or determined dynamically by the control panel), the control panel puts the smoke detector 1 into a test mode where the level of smoke signal is monitored but not communicated as an alarm. The controller 8b then activates the aerosol generator 5 causing a fixed quantity of aerosol to be released directly into the detection chamber 2. The generated aerosol has a certain momentum and will exit the detector 1 in a short period (e.g. 4 to 5 minutes) providing that there is a means of exit. If there is no means of exit (e.g. because the openings in the housing 11 are blocked), the aerosol remains for a longer period until it eventually condenses on the sides of the detection chamber 2. The period of the detecting element measuring an active signal within the chamber 2 is used by the control panel to determine if there is a viable smoke path into the detector 1 through the openings in the housing 11. For example, if the detecting element measures an active signal for at least 5 minutes, this indicates that there is an issue, and the control panel generates a fault signal to alert a technician that the detector 1 may not be operating correctly.

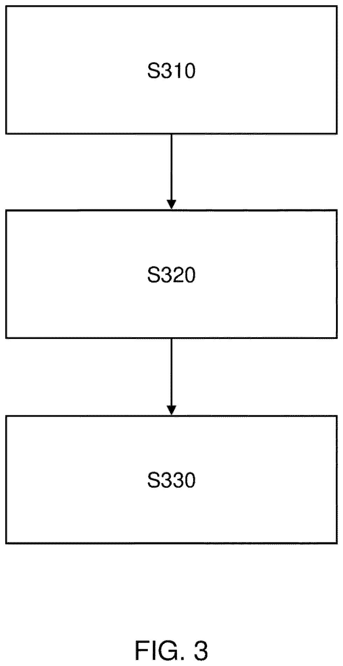

Figure 3 is a flow chart illustrating an exemplary method. The method includes receiving readings from a detector element of a smoke detector unit (310); determining, based on the readings, how long the detector element is able to detect aerosol in a detection chamber of the smoke detector unit (320); and generating, based on the result of the determination, an output indicating whether the smoke detector unit has passed a safety test (330).

Various further modifications to the above described examples, whether by way of addition, deletion or substitution, will be apparent to the skilled person to provide additional examples, any and all of which are intended to be encompassed by the appended claims.

There follows a list of numbered clauses defining particular embodiments of the invention. Where a numbered clause refers to an earlier numbered clause then those clauses may be considered in combination.
1. A smoke detector unit comprising:
   a detection chamber;
   a detector element configured to detect the presence of aerosol within the detection chamber;
   a housing; and
   an aerosol generator disposed within the housing, wherein the aerosol generator is configured to generate an aerosol using an aerosolisable material such that the generated aerosol is released into the detection chamber in use.
2. A smoke detector unit according to clause 1, further comprising a controller configured to determine, based on readings from the detector element, how long the detector element is able to detect the generated aerosol in the detection chamber, and generate, based on the result of the determination, an output indicating whether the smoke detector unit has passed a safety test.
3. A smoke detector unit according to clause 1 or 2, further comprising a reservoir for storing the aerosolisable material.
4. A smoke detector unit according to clause 3, wherein the aerosolisable material is a fluid, and wherein the smoke detector unit further comprises a flow controller configured to control flow of the fluid from the reservoir to the aerosol generator.
5. A smoke detector unit according to clause 4, wherein the aerosol generator is configured to activate at the same time as the flow controller, or up to 60 seconds after the flow controller.
6. A smoke detector unit according to clause 4 or 5, wherein the reservoir comprises a receptacle arranged to hold the fluid.
7. A smoke detector unit according to any one of clauses 1 to 6, wherein the housing encloses the detection chamber and the detector element.
8. A smoke detector unit according to clause 7, further comprising a channel connecting the aerosol generator to the detection chamber.
9. A smoke detector unit according to any one of clauses 1 to 6, wherein the housing comprises a first housing enclosing the detection chamber and the detector element, and a second housing enclosing the aerosol generator,
   wherein the first housing comprises a first opening adjacent to the detection chamber, and the second housing comprises a second opening adjacent to the aerosol generator, and
   wherein the first and second openings are arranged such that the generated aerosol is released into the detection chamber via the first and second openings in use.
10. A smoke detector unit according to any one of the preceding clauses, further comprising a power supply, wherein the aerosol generator is electrically connected to the power supply.
11. A system comprising:
   a smoke detector unit according to any one of the preceding clauses; and
   a controller configured to determine, based on readings received from the detector element of the smoke detector unit, how long the detector element is able to detect the generated aerosol in the detection chamber, and generate, based on the result of the determination, an output indicating whether the smoke detector unit has passed a safety test.
12. A system according to clause 11, further comprising a control panel connected to the smoke detector unit, wherein the control panel comprises the controller.
13. A method comprising:
   receiving readings from a detector element of a smoke detector unit;
   determining, based on the readings, how long the detector element is able to detect aerosol in a detection chamber of the smoke detector unit; and
   generating, based on the result of the determination, an output indicating whether the smoke detector unit has passed a safety test.

## Claims

1. A smoke detector unit comprising:
a detection chamber;
a detector element configured to detect the presence of aerosol within the detection chamber;
a housing;
a reservoir for storing a fluid; and
an aerosol generator disposed within the housing, wherein the aerosol generator is configured to generate an aerosol using the fluid such that the generated aerosol is released into the detection chamber in use; and
a flow controller configured to control flow of the fluid from the reservoir to the aerosol generator,
wherein the aerosol generator is configured to activate at a predetermined time after the flow controller.

2. A smoke detector unit according to claim 1, further comprising a controller configured to determine, based on readings from the detector element, how long the detector element is able to detect the generated aerosol in the detection chamber, and generate, based on the result of the determination, an output indicating whether the smoke detector unit has passed a safety test.

3. A smoke detector unit according to claim 1 or 2, wherein the aerosol generator is configured to activate up to 60 seconds after the flow controller.

4. A smoke detector unit according to any one of claims 1 to 3, wherein the reservoir comprises a receptacle arranged to hold the fluid.

5. A smoke detector unit according to any one of claims 1 to 4, wherein the housing encloses the detection chamber and the detector element.

6. A smoke detector unit according to claim 5, further comprising a channel connecting the aerosol generator to the detection chamber.

7. A smoke detector unit according to any one of claims 1 to 4, wherein the housing comprises a first housing enclosing the detection chamber and the detector element, and a second housing enclosing the aerosol generator,
wherein the first housing comprises a first opening adjacent to the detection chamber, and the second housing comprises a second opening adjacent to the aerosol generator, and
wherein the first and second openings are arranged such that the generated aerosol is released into the detection chamber via the first and second openings in use.

8. A smoke detector unit according to any one of the preceding claims, further comprising a power supply, wherein the aerosol generator is electrically connected to the power supply.

9. A system comprising:
a smoke detector unit according to any one of the preceding claims; and
a controller configured to determine, based on readings received from the detector element of the smoke detector unit, how long the detector element is able to detect the generated aerosol in the detection chamber, and generate, based on the result of the determination, an output indicating whether the smoke detector unit has passed a safety test.

10. A system according to claim 9, further comprising a control panel connected to the smoke detector unit, wherein the control panel comprises the controller.
